# EUROPEAN PATENT SPECIFICATION

(11) **EP 2 423 623 B1**
(45) Date of publication and mention of the grant of the patent: **17.06.2020**
(21) Application number: 10766989.7
(22) Date of filing: 14.04.2010
(51) Int. Cl.: F25D 11/00, F25B 1/00, F25B 5/02, F25D 11/02, F25B 49/02

(54) **REFRIGERATION DEVICE FOR LAND TRANSPORTATION**
KÜHLVORRICHTUNG FÜR TRANSPORT AUF DEM LANDWEG
DISPOSITIF DE RÉFRIGÉRATION POUR TRANSPORT TERRESTRE

(30) Priority: 20.04.2009 JP 2009102094
(43) Date of publication of application: 29.02.2012
(73) Proprietor: MITSUBISHI HEAVY INDUSTRIES THERMAL SYSTEMS, LTD., Tokyo 108-8215 (JP)
(72) Inventor: SHIMIZU, Yasuharu, Kiyosu-shi Aichi 452-8561 (JP); KAI, Masakazu, Kiyosu-shi Aichi 452-8561 (JP); KOBAYASHI, Naoki, Nagoya-shi Aichi 453-8515 (JP)
(74) Representative: Cabinet Beau de Loménie
(86) International application number: PCT/JP2010/056673
(87) International publication number: WO 2010/122932

(56) References cited:
- JP-A- H1 059 057
- JP-A- 58 187 762
- JP-A- S58 187 762
- JP-A- 2000 220 895
- JP-A- 2000 220 895
- JP-A- 2004 132 635
- JP-A- 2004 132 635

## Description

### {Technical Field}

The present invention relates to land-transport refrigeration systems applied to cargo holds etc. of trucks.

### {Background Art}

Examples of land-transport refrigeration systems that are installed in cargo holds of trucks for cooling the inside thereof include a direct-coupled type that utilizes the output from a vehicle-driving engine to drive a compressor used for compressing a refrigerant and a sub-engine type equipped with a dedicated engine.

A land-transport refrigeration system is configured to cool or heat the inside of a container (cool box) held by a load-carrying platform and is installed in a vehicle etc. that transports loaded cargo while maintaining it at a desired temperature.

In the land-transport refrigeration system, a refrigeration cycle is formed by connecting devices, such as a compressor, a condenser, and an evaporator, via a refrigerant pipe, and a controller that performs various kinds of operations is provided.

Another known example of a land-transport refrigeration system is a multi-evaporator type in which multiple (normally two to three) evaporator units are parallel-connected to a single compressor so that multiple cells with different transport temperatures can be created.

With regard to the operation of the sub-engine-type land-transport refrigeration system, a system that has a continuous operation mode for continuously performing an air-conditioning operation and an automatic start-stop operation mode for intermittently performing an air-conditioning operation is widely used.

The continuous operation mode allows for enhanced temperature accuracy but leads to increased fuel consumption since the sub-engine is always in operation.

The automatic start-stop operation mode involves performing control for stopping the operation of the sub-engine (i.e., turning off the thermostat) when the temperature inside the container reaches a set air-conditioning temperature, and for resuming the operation of the sub-engine (i.e., turning on the thermostat) when the temperature difference between the container temperature and the set air-conditioning temperature becomes higher than or equal to a preset value due to heat entering from the outside, so as to adjust the container temperature within a certain temperature range. Because the sub-engine is intermittently stopped in this manner, the fuel consumption of the sub-engine can be reduced.

With regard to the multi-evaporator-type land-transport refrigeration system, operation is similarly performed based on the automatic start-stop operation mode in which an intermittent air-conditioning operation is performed (by repeatedly turning the thermostat on and off) by supplying the refrigerant to the evaporators and stopping the supply of the refrigerant thereto so as to adjust each container temperature, as discussed in, for example, PTL 1.

This is because, in the multi-evaporator-type land-transport refrigeration system, the thermostat is turned on and off for each evaporator unit at irregular timings; therefore, the sub-engine cannot be stopped when the thermostat is turned on for one of the evaporator units. JPS58187762 discloses an energy-saving operation system of refrigerating machine.

### {Citation List}

### {Patent Literature}

{PTL 1}
Japanese Unexamined Patent Application, Publication No. 2004-132635

### {Summary of Invention}

### {Technical Problem}

Since the sub-engine cannot be stopped in the type discussed in PTL 1 in which the thermostat is repeatedly turned on and off by supplying the refrigerant to the evaporators and stopping the supply of the refrigerant thereto, a reduced fuel consumption effect, which is an objective of the present invention, cannot be achieved.

Furthermore, even if the sub-engine is to be stopped when all the evaporator units are in a thermostat-off state, the frequency at which the sub-engine is stopped is extremely low since the thermostat is turned on and off for each evaporator unit at irregular timings.

In view of these circumstances, it is an object of the present invention to provide a land-transport refrigeration system that can maintain a reduced fuel consumption effect even when operating under a multi-evaporator-type automatic start-stop operation mode.

### {Solution to Problem}

In order to solve the aforementioned problems, the present invention employs the following solutions.

Specifically, an aspect of the present invention provides a land-transport refrigeration system according to claim 1.

Because the automatic start-stop operation mode includes the thermostat-off retaining operation mode that prevents the temperature in the refrigeration cell having reached the corresponding set temperature from reaching the corresponding operation-regaining temperature until all the refrigeration cells reach their respectively set temperatures, the thermostat-off retaining operation is performed for the refrigeration cell having previously reached the set temperature and being in the thermostat-off state until all the refrigeration cells reach their respectively set temperatures, thereby preventing the refrigeration cell from reaching the operation-regaining temperature (i.e., from reaching a thermostat-on state).

Therefore, when the last refrigeration cell reaches the corresponding set temperature and is switched to the thermostat-off state, all the refrigeration cells are in the thermostat-off state since the thermostat-off state is maintained for the refrigeration cell that has previously reached the thermostat-off state. In other words, the thermostat-off retaining operation mode deliberately delays the refrigeration cell having previously reached the thermostat-off state from reaching the thermostat-on state so as to create a condition where all the refrigeration cells are in the thermostat-off state.

Since all the refrigeration cells are in the thermostat-off state, it becomes unnecessary to supply the refrigerant to all the evaporators. Thus, the driving of the compressor can be stopped, whereby the power source, such as an engine, for driving the compressor can be stopped. The ability to stop the engine allows for a reduction in fuel consumption.

The term "all" in this case refers to all the refrigeration cells that require a temperature adjustment operation, but does not include refrigeration cells that do not require such an operation.

In the above aspect, retaining-operation-starting temperatures for resuming the operation of evaporators may be set between the set temperatures and the operation-regaining temperatures in the thermostat-off retaining operation mode, and the thermostat-off retaining operation mode may include repeating the operation and stopping of the evaporator units so that the temperatures in the refrigeration cells are between the set temperatures and the retaining-operation-starting temperatures.

Accordingly, since the thermostat-off state is maintained between the set temperatures and the operation-regaining temperatures, the temperature difference can be reduced until the thermostat-on state is regained. Consequently, the temperature accuracy in the refrigeration cells can be increased.

In the above aspect, retaining-operation-stopping temperatures for stopping the operation of evaporators may be set opposite the operation-regaining temperatures relative to the set temperatures in the thermostat-off retaining operation mode, and the thermostat-off retaining operation mode may include repeating the operation and stopping of the evaporator units so that the temperatures in the refrigeration cells are between the operation-regaining temperatures and the retaining-operation-stopping temperatures.

Accordingly, the temperature difference until the thermostat-on state is regained is increased to between the retaining-operation-stopping temperatures and the operation-regaining temperatures, thereby extending the time from the thermostat-off state to the thermostat-on state. Consequently, the stop time of the power source can be extended, thereby allowing for a further reduction in fuel consumption.

In the above aspect, the operation of each of the evaporator units may include supplying the refrigerant to an evaporator, and the stopping of each of the evaporator units may include stopping the supply of the refrigerant to the evaporator.

### {Advantageous Effects of Invention}

According to the present invention, because the automatic start-stop operation mode includes the thermostat-off retaining operation mode that prevents the temperature in the refrigeration cell having reached the corresponding set temperature from reaching the corresponding operation-regaining temperature until all the refrigeration cells reach their respectively set temperatures, the power source, such as an engine, that drives the compressor can be stopped, whereby the fuel consumption can be reduced accordingly.

### {Brief Description of Drawings}

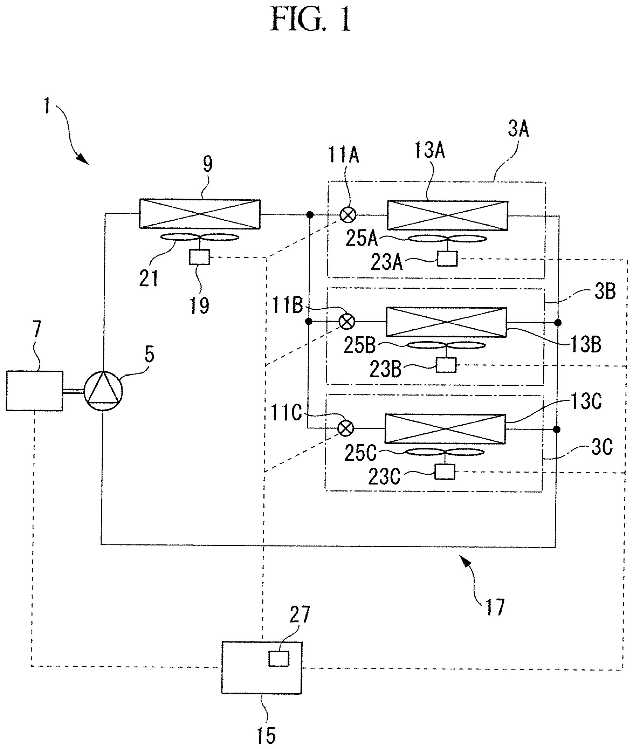

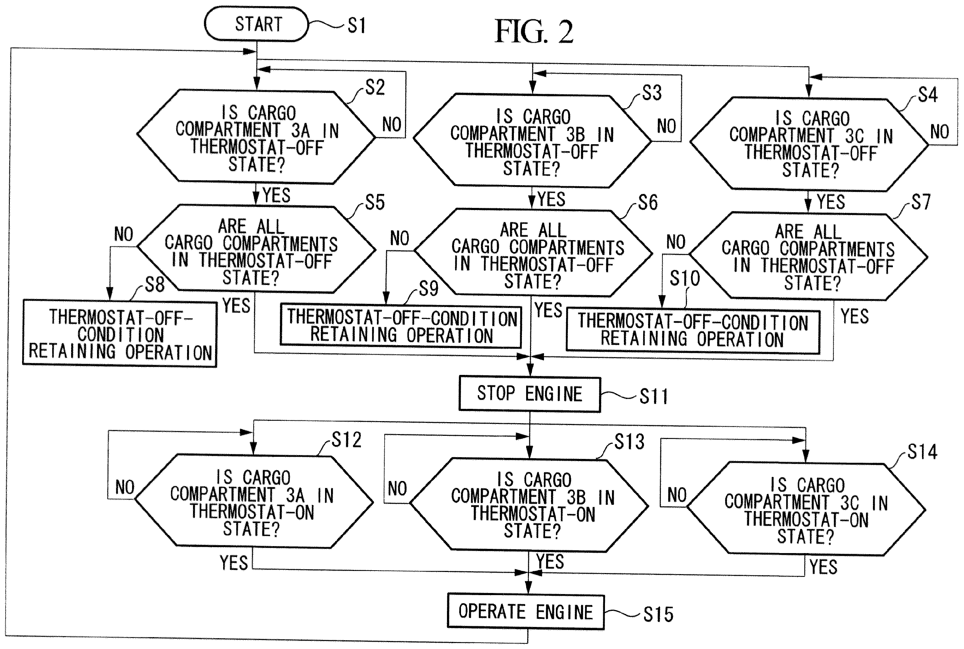

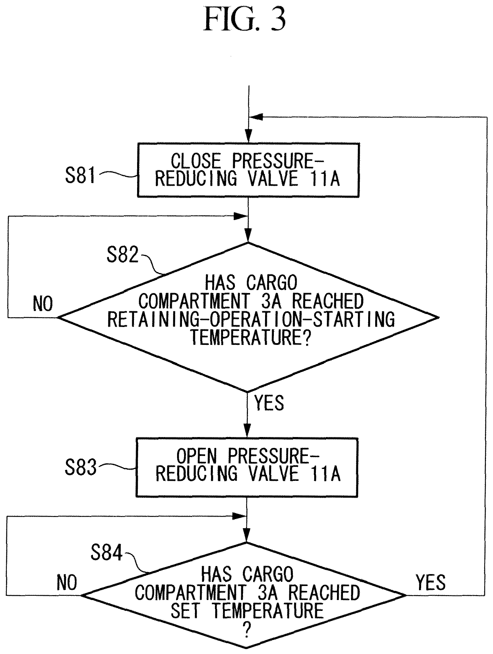

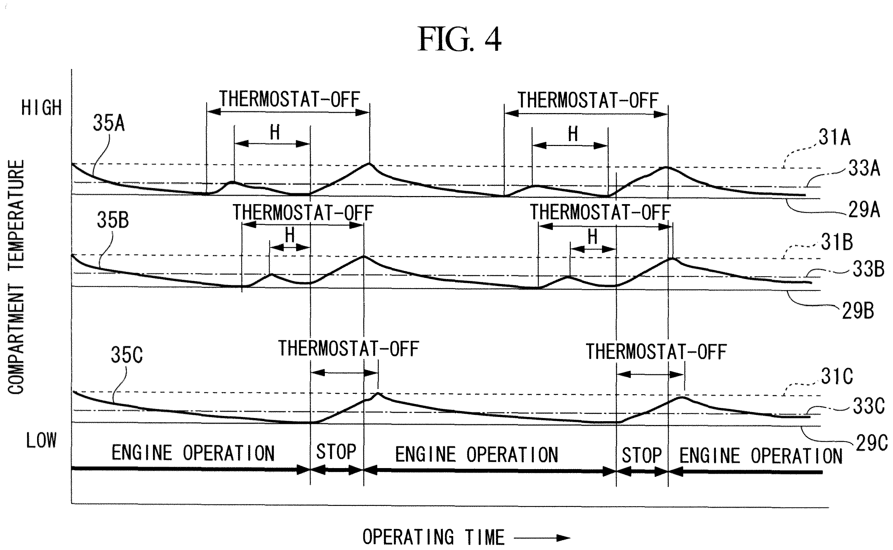

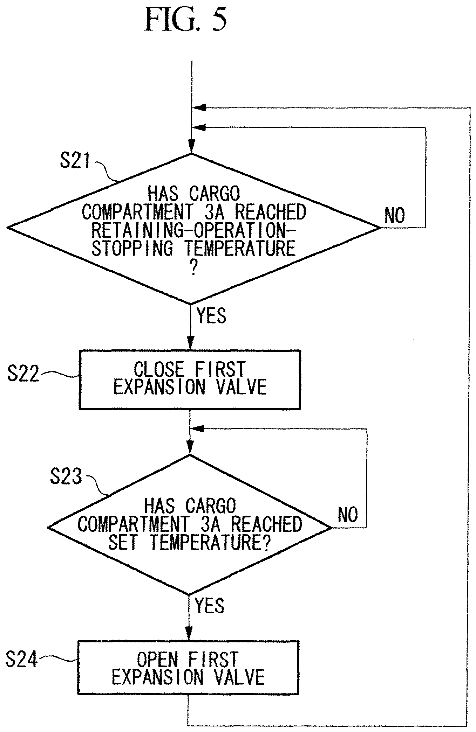

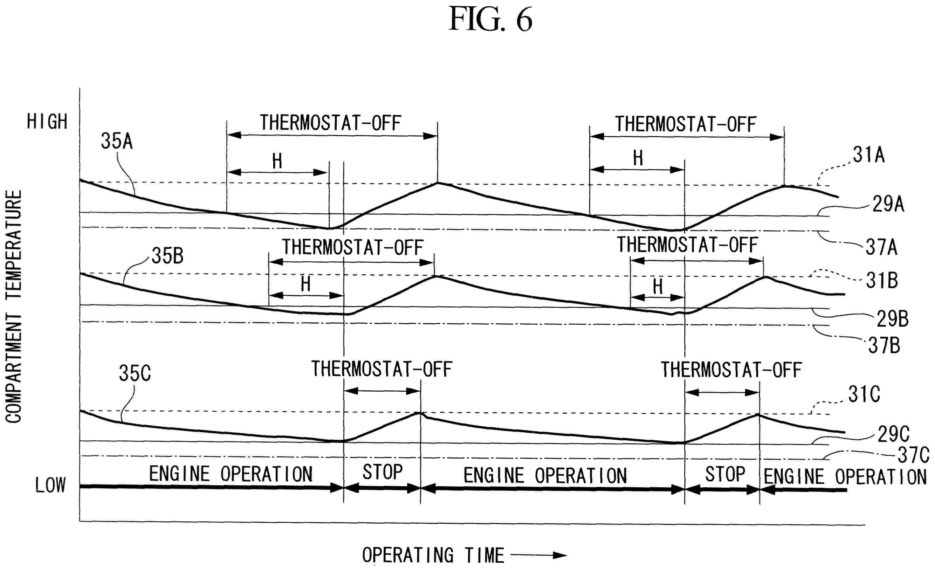

{Fig. 1} Fig. 1 is a block diagram schematically showing the overall configuration of a land-transport refrigeration system according to a first embodiment of the present invention.
{Fig. 2} Fig. 2 is a flow chart of an automatic start-stop operation mode in the land-transport refrigeration system according to the first embodiment of the present invention.
{Fig. 3} Fig. 3 is a flow chart of a thermostat-off-condition retaining operation in the land-transport refrigeration system according to the first embodiment of the present invention.
{Fig. 4} Fig. 4 is a graph showing a temperature change in each compartment during the automatic start-stop operation mode of the land-transport refrigeration system according to the first embodiment of the present invention.
{Fig. 5} Fig. 5 is a flow chart of a thermostat-off-condition maintaining operation in a land-transport refrigeration system according to a second embodiment of the present invention.
{Fig. 6} Fig. 6 is a graph showing a temperature change in each compartment during an automatic start-stop operation mode of the land-transport refrigeration system according to the second embodiment of the present invention.

### {Description of Embodiments}

Embodiments according to the present invention will be described below with reference to the drawings.

### {First Embodiment}

A land-transport refrigeration system 1 according to a first embodiment of the present invention will be described below with reference to Figs. 1 to 4.

Fig. 1 is a block diagram schematically showing the overall configuration of the land-transport refrigeration system 1 according to this embodiment.

The land-transport refrigeration system 1 is installed in a cargo hold mounted on a load-carrying platform of a truck or the like, and is called a multi-evaporator type since it is capable of cooling and heating three partitioned refrigeration cells inside the cargo hold to different temperatures.

The cargo hold, which forms cooled spaces, is mounted on the load-carrying platform of the truck. This cargo hold is provided with, for example, partitioning walls in the internal space thereof so as to be partitioned into three refrigeration cells, which are a cargo compartment 3A, a cargo compartment 3B, and a cargo compartment 3C.

The land-transport refrigeration system 1 includes a compressor 5 that compresses a refrigerant so as to discharge a high-pressure gas refrigerant, an engine (power source) 7 that drives the compressor 5, a condenser 9 that is disposed outside the cargo hold and performs heat exchange between the high-pressure gas refrigerant from the compressor 5 and the ambient air, pressure-reducing valves 11A, 11B, and 11C that reduce the pressure of a liquid refrigerant from the condenser 9, evaporators 13A, 13B, and 13C disposed within the cargo compartments 3A, 3B, and 3C, and a controller 15.

The output side of the compressor 5, the condenser 9, the pressure-reducing valves 11A, 11B, and 11C, the evaporators 13A, 13B, and 13C, and the input side of the compressor 5 are connected to each other via refrigerant pipes, thereby forming a refrigerant circuit 17.

The pressure-reducing valves 11A, 11B, and 11C and the evaporators 13A, 13B, and 13C respectively form pairs, and are parallel-connected to the refrigerant circuit 17.

The compressor 5 is, for example, an open-type scroll compressor, which is small and exhibits high performance. The type of the compressor 5 is not limited in particular.

The engine 7 is a dedicated one that is independent of the engine used for driving the vehicle. Such a land-transport refrigeration system 1 is called a sub-engine type. The sub-engine-type land-transport refrigeration system 1 differs from a direct-coupled type that utilizes the output from the vehicle-driving engine in that the operation of the compressor 5, which affects the cooling capacity, is advantageously not affected by the vehicle-driving engine whose rotation speed fluctuates frequently depending on the running conditions of the vehicle.

The condenser 9 is formed of, for example, a rectangular parallel-flow heat exchanger, but is not limited thereto.

The condenser 9 is supplied with ambient air by a condenser fan 21 that is driven by a condenser fan motor 19.

The pressure-reducing valves 11A, 11B, and 11C are electronic expansion valves whose degree of opening is adjustable. The flow rate of the refrigerant can be adjusted from zero to a freely-chosen value by adjusting the degree of opening of each of the pressure-reducing valves 11A, 11B, and 11C.

If thermal expansion valves are to be used as the pressure-reducing valves 11A, 11B, and 11C, electromagnetic on-off valves are provided at the upstream side of the pressure-reducing valves 11A, 11B, and 11C so that the supply of refrigerant to the evaporators 13A, 13B, and 13C can be stopped.

The evaporators 13A, 13B, and 13C are disposed inside the respective compartments and each have a function of cooling the air inside the corresponding compartment by performing heat exchange between the liquid refrigerant and the air inside the compartment.

The evaporators 13A, 13B, and 13C are supplied with the air inside the compartments by evaporator fans 25A, 25B, and 25C driven by evaporator fan motors 23A, 23B, and 23C, respectively.

The pressure-reducing valves 11A, 11B, and 11C, the evaporators 13A, 13B, and 13C, the evaporator fan motors 23A, 23B, and 23C, and the evaporator fans 25A, 25B, and 25C respectively constitute evaporator units according to the present invention.

The controller 15 is configured to perform various kinds of control of the land-transport refrigeration system 1. The controller 15 receives various kinds of sensor information and various operating conditions, such as set temperatures set by a user, and uses the received information as a basis for controlling the operation of the compressor 5, the engine 7, the condenser fan motor 19, and the evaporator fan motors 23A, 23B, and 23C as well as the degree of opening of the pressure-reducing valves 11A, 11B, and 11C in accordance with a predetermined control flow.

The controller 15 has an automatic start-stop operation mode 27.

The operation of the land-transport refrigeration system 1 having the above-described configuration will now be described.

When rotationally driven by the engine 7, the compressor 5 takes in and compresses low-pressure refrigerant gas before discharging the refrigerant gas, which is high-temperature, high-pressure superheated gas (sometimes referred to as "hot gas" hereinafter).

The hot gas flows into the condenser 9. The hot gas flowing into the condenser 9 undergoes heat exchange with ambient air blown by the condenser fan 21 so as to be condensed and liquefied.

This liquid refrigerant is reduced in pressure by the pressure-reducing valves 11A, 11B, and 11C before being supplied to the evaporators 13A, 13B, and 13C. The refrigerant supplied to the evaporators 13A, 13B, and 13C cools the air circulating inside the cargo compartments 3A, 3B, and 3C due to the evaporator fans 25A, 25B, and 25C, whereby the refrigerant is evaporated.

This cooled air cools the inside of each of the cargo compartments 3A, 3B, and 3C to a predetermined temperature. The evaporated refrigerant is taken into the compressor 5 again so that the cooling operation is performed again by repeating the same cycle.

Next, the operation of the automatic start-stop operation mode 27 will be described with reference to Figs. 2 to 4.

Fig. 2 is a flow chart of the automatic start-stop operation mode 27 in the land-transport refrigeration system 1 according to this embodiment. Fig. 3 is a flow chart of a thermostat-off-condition retaining operation. Fig. 4 is a graph showing a temperature change in the compartment temperature in each of the cargo compartments 3A, 3B, and 3C.

In this case, the automatic start-stop operation mode 27 for a different-temperature cooling operation in which the cargo compartments 3A, 3B, and 3C have different set temperatures 29A, 29B, and 29C will be described.

The set temperatures 29A, 29B, and 29C are set such that the set temperature 29A is the highest, the set temperature 29B is the second highest, and the set temperature 29C is the lowest. When the temperatures in the cargo compartments 3A, 3B, and 3C are reduced to the set temperatures 29A, 29B, and 29C, a thermostat-off state in which cooling is not necessary is obtained.

Operation-regaining temperatures 31A, 31B, and 31C, which are temperature values for regaining the cooling operation and are higher than the set temperatures 29A, 29B, and 29C, are set for the cargo compartments 3A, 3B, and 3C, respectively. The operation-regaining temperatures 31A, 31B, and 31C are set to be higher than the set temperatures 29A, 29B, and 29C by, for example, 3°C. 3°C is an example, and it is not limited thereto.

Retaining-operation-starting temperatures 33A, 33B, and 33C, which are for starting a thermostat-off-condition retaining operation H and are set to be higher than the set temperatures 29A, 29B, and 29C, are set for the cargo compartments 3A, 3B, and 3C, respectively. The retaining-operation-starting temperatures 33A, 33B, and 33C are set between the set temperatures 29A, 29B, and 29C and the operation-regaining temperatures 31A, 31B, and 31C. The retaining-operation-starting temperatures 33A, 33B, and 33C are set to be higher than the set temperatures 29A, 29B, and 29C by, for example, 1°C. 1°C is an example, and it is not limited thereto.

When the cooling operation is performed as described above, compartment temperatures 35A, 35B, and 35C in the cargo compartments 3A, 3B, and 3C gradually decrease, as shown in Fig. 4. The controller 15 starts the automatic start-stop operation mode 27 (step S1).

The controller 15 determines whether or not the thermostat-off state is obtained as a result of the compartment temperatures in the cargo compartments 3A, 3B, and 3C being reduced to the set temperatures 29A, 29B, and 29C on the basis of detection values of temperature sensors (not shown) within the respective compartments (steps S2, S3, and S4).

The thermostat-off state is a state in which cooling (heating) is not necessary due to the compartment temperatures being close to the set temperatures.

When the thermostat-off state is obtained (YES) in steps S2, S3, and S4, the controller 15 determines whether or not all the cargo compartments 3A, 3B, and 3C are in the thermostat-off state (steps S5, S6, and S7).

Because the timing at which the set temperatures 29A, 29B, and 29C are reached normally differs among the cargo compartments 3A, 3B, and 3C, when the first cargo compartment is in the thermostat-off state, the other cargo compartments are not in the thermostat-off state yet. Therefore, at first, NO is obtained in steps S5, S6, and S7.

In this case, the process proceeds to the thermostat-off-condition retaining operation (thermostat-off retaining operation mode) H (steps S8, S9, and S10).

Fig. 3 illustrates the flow of the thermostat-off-condition retaining operation H in step S8. Because the flow of the thermostat-off-condition retaining operation H in steps S9 and S10 is basically the same as that in step S8 except that the target components are different, the following description will only be directed to step S8.

When the thermostat-off state is obtained in the cargo compartment 3A, the pressure-reducing valve 11A is closed (step S81) so as to prevent the refrigerant from being supplied to the evaporator 13A.

Consequently, since the cooling operation is not performed in the cargo compartment 3A, the compartment temperature in the cargo compartment 3A increases due to heat entering therein from the outside.

The controller 15 determines whether or not the compartment temperature in the cargo compartment 3A has reached the retaining-operation-starting temperature 33A (step S82). If the compartment temperature in the cargo compartment 3A has reached the retaining-operation-starting temperature 33A (YES) in step S82, the controller 15 opens the pressure-reducing valve 11A (step S83) so as to supply the refrigerant to the evaporator 13A. Consequently, the cooling operation is performed in the cargo compartment 3A, whereby the compartment temperature in the cargo compartment 3A decreases.

The controller 15 determines whether or not the compartment temperature in the cargo compartment 3A has reached the set temperature 29A (step S84). If the set temperature 29A is not reached (NO), the cooling operation is continued. When the set temperature is reached (YES), the process returns to step S81 where the cooling operation is stopped.

By repeating this, the compartment temperature in the cargo compartment 3A is maintained between the set temperature 29A and the retaining-operation-starting temperature 33A, that is, the thermostat-off state can be maintained.

Since the retaining-operation-starting temperatures 33A, 33B, and 33C serving as threshold values for performing the cooling operation are set between the set temperatures 29A, 29B, and 29C and the operation-regaining temperatures 31A, 31B, and 31C in this manner, the temperature difference can be reduced until a thermostat-on state is reached. Consequently, the temperature accuracy in the cargo compartments 3A, 3B, and 3C can be increased.

Subsequently, when the second cargo compartment reaches the thermostat-off state, the last cargo compartment is not in the thermostat-off state yet. Therefore, the process similarly proceeds to the thermostat-off-condition retaining operation H.

When the last cargo compartment reaches the thermostat-off state as a result of the compartment temperature reaching the set temperature 29A, 29B, or 29C, it is determined in steps S5, S6, and S7 that all the compartments are in the thermostat-off state.

Regarding the cargo compartment 3A, 3B, or 3C that has reached the thermostat-off state prior to the other compartments, the thermostat-off-condition retaining operation H deliberately delays the compartment from reaching the thermostat-on state so as to create a condition where all the cargo compartments 3A, 3B, and 3C are in the thermostat-off state.

In this case, since the cooling operation becomes unnecessary in all the cargo compartments 3A, 3B, and 3C, the engine 7 is stopped (step S11), thereby stopping the operation of the compressor 5. Consequently, the refrigerant stops circulating through the refrigerant circuit 17.

Because the thermostat-off-condition retaining operation H deliberately creates a condition where there is no need to supply the refrigerant to all the evaporators 13A, 13B, and 13C, the engine 7 can be stopped. The ability to stop the engine 7 allows for a reduction in fuel consumption.

Since the cooling operation is not performed in all the cargo compartments 3A, 3B, and 3C when the engine 7 stops, the compartment temperatures in the cargo compartments 3A, 3B, and 3C increase due to heat entering therein from the outside.

The controller 15 determines whether or not the thermostat-on state is reached as a result of the compartment temperatures in the cargo compartments 3A, 3B, and 3C reaching the operation-regaining temperatures 31A, 31B, and 31C (step S12, S13, and S14).

If one of the cargo compartments 3A, 3B, and 3C is in the thermostat-on state (YES), the controller 15 resumes the operation of the engine 7 (step S15) so as to actuate the compressor 5.

Fig. 4 illustrates an example of a temperature change in each of the compartment temperatures 35A, 35B, and 35C in the cargo compartments 3A, 3B, and 3C under the automatic start-stop operation mode 27.

The cargo compartment 3A reaches the set temperature 29A first so as to be switched to the thermostat-off state, whereby YES is obtained in step S2. Because the cargo compartments 3B and 3C have not yet reached the set temperatures 29B and 29C at that time, NO is obtained in step S5, and the process proceeds to the thermostat-off-condition retaining operation H in step S8 for the cargo compartment 3A. Specifically, the cooling operation is intermittently performed by opening and closing the pressure-reducing valve 11A using the retaining-operation-starting temperature 33A as a threshold value.

Subsequently, the cargo compartment 3B reaches the set temperature 29B so as to be switched to the thermostat-off state, whereby YES is obtained in step S3. Because the cargo compartment 3C has not yet reached the set temperature 29C at that time, NO is obtained in step S6, and the process proceeds to the thermostat-off-condition retaining operation H in step S9 for the cargo compartment 3B. Specifically, the cooling operation is intermittently performed by opening and closing the pressure-reducing valve 11B using the retaining-operation-starting temperature 33B as a threshold value.

While the thermostat-off state is retained in the cargo compartments 3A and 3B in this manner, the cargo compartment 3C reaches the set temperature 29C. Since the cargo compartments 3A, 3B, and 3C are all in the thermostat-off state (YES) in step S7, the engine 7 is stopped.

When the cooling operation is not performed due to the stopped engine 7, the compartment temperatures 35A, 35B, and 35C in the cargo compartments 3A, 3B, and 3C increase. Because the compartment temperature 35B in the cargo compartment 3B reaches the operation-regaining temperature 31B first in Fig. 4, it is determined in step S13 that the cargo compartment 3B is switched to the thermo-on state, and the operation of the engine 7 is resumed.

In addition, the pressure-reducing valve 11B is opened, thereby starting the cooling operation in the cargo compartment 3B.

Regarding the cargo compartments 3A and 3C in this case, if the compartment temperatures 35A and 35C are higher than or equal to the retaining-operation-starting temperatures 33A and 33C or are lower than the retaining-operation-starting temperatures 33A and 33C, the thermostat-off-condition retaining operation H is commenced when the retaining-operation-starting temperatures 33A and 33C are reached. This is repeated hereafter.

### {Second Embodiment}

This embodiment differs from the first embodiment in how the thermostat-off-condition retaining operation is performed. Therefore, this difference will be discussed in this embodiment, whereas redundant descriptions of other parts will be omitted.

Components that are the same as those in the first embodiment are given the same reference numerals, and detailed descriptions thereof will be omitted.

Fig. 5 is a flow chart of a thermostat-off-condition retaining operation in the land-transport refrigeration system 1 according to this embodiment. Fig. 6 is a graph showing a temperature change in the compartment temperature in each of the cargo compartments 3A, 3B, and 3C.

In this embodiment, the automatic start-stop operation mode 27 for a different-temperature cooling operation in which the cargo compartments 3A, 3B, and 3C have different set temperatures 29A, 29B, and 29C will be described.

The set temperatures 29A, 29B, and 29C and the operation-regaining temperatures 31A, 31B, and 31C are set as in the first embodiment.

For the respective cargo compartments 3A, 3B, and 3C, retaining-operation-stopping temperatures 37A, 37B, and 37C for stopping the thermostat-off-condition retaining operation H are set at the lower temperature side of the set temperatures 29A, 29B, and 29C, that is, at the opposite side of the operation-regaining temperatures 31A, 31B, and 31C relative to the set temperatures 29A, 29B, and 29C. The retaining-operation-stopping temperatures 37A, 37B, and 37C are set to be lower than the set temperatures 29A, 29B, and 29C by, for example, 1°C. 1°C is an example, and it is not limited thereto.

The operation of the automatic start-stop operation mode 27 when the land-transport refrigeration system 1 according to this embodiment having the above-described configuration is in operation will now be described.

The automatic start-stop operation mode 27 is similar to that in the first embodiment shown in Fig. 2 but differs therefrom in the content of the thermostat-off-condition retaining operation in steps S8, S9, and S10. The different thermostat-off-condition retaining operation will be mainly described here on the basis of the temperature change in the compartment temperature of each of the cargo compartments 3A, 3B, and 3C shown in Fig. 6 as an example.

When the cooling operation is performed for the cargo compartments 3A, 3B, and 3C, the compartment temperatures in the cargo compartments 3A, 3B, and 3C decrease and approach the set temperatures 29A, 29B, and 29C. The cargo compartment 3A reaches the set temperature 29A first so as to be switched to the thermostat-off state, whereby YES is obtained in step S2.

Because the cargo compartments 3B and 3C have not yet reached the set temperatures 29B and 29C at that time, NO is obtained in step S5, and the process proceeds to the thermostat-off-condition retaining operation H in step S8 for the cargo compartment 3A.

In the thermostat-off-condition retaining operation H, the cooling operation in the cargo compartment 3A is continued without stopping. Specifically, since the pressure-reducing valve 11A is maintained in the opened state, the refrigerant is supplied to the evaporator 13A, thereby continuously cooling the cargo compartment 3A.

When the process proceeds to the thermostat-off-condition retaining operation H, the controller 15 determines whether or not the cargo compartment 3A has reached the retaining-operation-stopping temperature 37A (step S21), as shown in Fig. 5. If the compartment temperature in the cargo compartment 3A has reached the retaining-operation-stopping temperature 37A (YES) in step S21, the controller 15 closes the pressure-reducing valve 11A (step S22) so as to prevent the refrigerant from being supplied to the evaporator 13A.

Consequently, since the cooling operation is not performed in the cargo compartment 3A, the compartment temperature in the cargo compartment 3A increases due to heat entering therein from the outside.

The controller 15 determines whether or not the compartment temperature in the cargo compartment 3A has reached the set temperature 29A (step S23). If the compartment temperature in the cargo compartment 3A has reached the set temperature 29A (YES) in step S23, the controller 15 opens the pressure-reducing valve 11A (step S24) so as to supply the refrigerant to the evaporator 13A. Consequently, the cooling operation is performed in the cargo compartment 3A, whereby the compartment temperature in the cargo compartment 3A decreases.

By repeating this, the compartment temperature in the cargo compartment 3A is maintained between the set temperature 29A and the retaining-operation-stopping temperature 37A, that is, the thermostat-off state can be maintained.

Subsequently, the cargo compartment 3B reaches the set temperature 29B so as to be switched to the thermostat-off state, whereby YES is obtained in step S3. Because the cargo compartment 3C has not yet reached the set temperature 29C at that time, NO is obtained in step S6, and the process proceeds to the thermostat-off-condition retaining operation H in step S9 for the cargo compartment 3B.

The thermostat-off-condition retaining operation H is performed in the same manner as that for the cargo compartment 3A described above.

Specifically, the cooling operation is intermittently performed by opening and closing the pressure-reducing valve 11B using the set temperature 29B and the retaining-operation-stopping temperature 37B as threshold values.

While the thermostat-off state is maintained in the cargo compartments 3A and 3B in this manner, the cargo compartment 3C reaches the set temperature 29C. Since the cargo compartments 3A, 3B, and 3C are all in the thermostat-off state (YES) in step S7, the engine 7 is stopped.

When the cooling operation is not performed due to the stopped engine 7, the compartment temperatures 35A, 35B, and 35C in the cargo compartments 3A, 3B, and 3C increase. Because the compartment temperature 35C in the cargo compartment 3C reaches the operation-regaining temperature 31C first in Fig. 6, it is determined in step S14 that the cargo compartment 3C is switched to the thermostat-on state, and the operation of the engine 7 is resumed.

In addition, the pressure-reducing valve 11C is opened, thereby starting the cooling operation in the cargo compartment 3C.

Regarding the cargo compartments 3A and 3B in this case, if the compartment temperatures 35A and 35B are higher than or equal to the set temperatures 29A and 29B or are lower than the set temperatures 29A and 29B, the thermostat-off-condition retaining operation H is commenced when the set temperatures 29A and 29B are reached. This is repeated hereafter.

Because the retaining-operation-stopping temperatures 37A, 37B, and 37C serving as threshold values for performing the cooling operation are set to be lower than the set temperatures 29A, 29B, and 29C in this manner, the temperature difference until the thermostat-on state is regained becomes greater, thereby extending the time from the thermostat-off state to the thermostat-on state. Consequently, the stop time of the engine 7 can be extended, thereby allowing for a further reduction in fuel consumption of the engine 7.

The present invention is not to be limited to the embodiments described above and permits modifications where appropriate so long as they do not depart from the scope of the invention defined by the claims. For example, although each of the above embodiments is applied to a type that performs a cooling operation, each embodiment can also be applied to a type that performs a heating operation or that performs both cooling and heating operations.

### {Reference Signs List}

- 1: land-transport refrigeration system
- 3A, 3B, 3C: cargo compartment
- 5: compressor
- 7: engine
- 11A, 11B, 11C: pressure-reducing valve
- 13A, 13B, 13C: evaporator
- 15: controller
- 17: refrigerant circuit
- 27: automatic start-stop operation mode
- 29A, 29B, 29C: set temperature
- 31A, 31B, 31C: operation-regaining temperature
- 33A, 33B, 33C: retaining-operation-starting temperature
- 37A, 37B, 37C: retaining-operation-stopping temperature
- H: thermostat-off-condition retaining operation

## Claims

1. A land-transport refrigeration system capable of cooling and heating a plurality of refrigeration cells, the land-transport refrigeration system comprising a compressor (5) driven by a dedicated power source; a plurality of evaporator units (13A-13C) disposed respectively in the plurality of refrigeration cells and parallel-connected to a refrigerant circuit through which a refrigerant circulates; and a controller (15) having an automatic start-stop operation mode (27) that
1) obtains a thermostat-off state to stop the operation of the individual evaporator units when set temperatures (29A-29C) set for the respective refrigeration cells are reached,
2) stops the operation of the compressor (5) when all the refrigeration cells are in thermostat-off state, and
3) resumes the operation of the compressor (5) when operation-regaining temperatures (31A-31C) set to be higher than or lower than the set temperatures by a predetermined temperature are reached,
wherein,
in the automatic start/stop operation mode, retaining-operation-starting temperatures (33A-33C) for resuming the operation of the evaporator units (13A-13C) are set between the set temperatures (29A-29C) and the operation-regaining temperatures (31A-31C), and
wherein, the automatic start-stop operation mode (27) includes a thermostat-off retaining operation mode that repeats the operation and stopping of the evaporator units (13A-13C) until all the refrigeration cells reach the respective set temperatures so that the temperatures in the refrigeration cells are between the set temperatures and the retaining-operation-starting temperatures, by performing the operation of the evaporator units (13A-13C) when the refrigeration cells having reached the respective set temperatures reach the retaining-operation-starting temperatures, and by stopping the operation of the evaporator units (13A-13C) when the refrigeration cells reach the respective set temperatures.

2. A land-transport refrigeration system capable of cooling and heating a plurality of refrigeration cells, the land-transport refrigeration system comprising a compressor (5) driven by a dedicated power source; a plurality of evaporator units disposed respectively in the plurality of refrigeration cells and parallel-connected to a refrigerant circuit through which a refrigerant circulates; and a controller (15) having an automatic start-stop operation mode (27) that
1) enters a thermostat-off state to stop the operation of the individual evaporator units (13A-13C) when set temperatures (29A-29C) set for the respective refrigeration cells are reached,
2) stops the operation of the compressor (5) when all the refrigeration cells are in thermostat-off state, and
3) resumes the operation of the compressor (5) when operation-regaining temperatures (31A-31C) set to be higher than or lower than the set temperatures by a predetermined temperature are reached, wherein,
in the automatic start-stop operation mode, retaining-operation-stopping temperatures (37A-37C) for stopping the operation of the evaporator units (13A-13C) are set at a lower temperature side of the set temperatures when the operation-regaining temperature is set higher than the set temperature by a predetermined amount, and wherein,
the automatic start-stop operation mode includes a thermostat-off retaining operation mode that repeats the operation and stopping of the evaporator units (13A-13C) until all the refrigeration cells reach the respective set temperatures so that the temperatures in the refrigeration cells are between the set temperatures and the retaining-operation-stopping temperatures, by continuing the operation of the evaporator units (13A-13C) in the refrigeration cells having reached the respective set temperatures and stopping the operation of the evaporator units (13A-13C) when the refrigeration cells reach the retaining-operation-starting temperatures, and by performing the operation of the evaporator units (13A-13C) when the refrigeration cells reach the respective set temperatures.

3. The land-transport refrigeration system according to any one of Claims 1 or 2, wherein the operation of each of the evaporator units includes supplying the refrigerant to an evaporator (13A-13C), and wherein the stopping of each of the evaporator units includes stopping the supply of the refrigerant to the evaporator (13A-13C).

## Patentansprüche

1. Landtransportkältesystem, das in der Lage ist, eine Vielzahl von Kältezellen zu kühlen und zu erwärmen, wobei das Landtransportkältesystem einen Verdichter (5), der von einer dedizierten Stromquelle angetrieben wird; eine Vielzahl von Verdampfereinheiten (13A-13C), die jeweils in der Vielzahl von Kältezellen angeordnet und parallel mit einem Kältemittelkreis, durch den ein Kältemittel zirkuliert, verbunden sind; sowie eine Steuerung (15) mit einem automatischen Start-Stopp-Betriebsmodus (27) umfasst, die
1) einen Thermostat-aus-Status erhält, um den Betrieb der einzelnen Verdampfereinheiten zu stoppen, wenn eingestellte Temperaturen (29A-29C), die für die jeweiligen Kältezellen eingestellt sind, erreicht werden,
2) den Betrieb des Verdichters (5) stoppt, wenn sich alle Kältezellen im Thermostat-aus-Status befinden, und
3) den Betrieb des Verdichters (5) wiederaufnimmt, wenn Betriebswiedererlangungstemperaturen (31A-31C), die derart eingestellt sind, dass sie um eine vorbestimmte Temperatur höher oder niedriger sind als die eingestellten Temperaturen, erreicht werden,
wobei
im automatischen Start/Stopp-Betriebsmodus Betriebsstarthaltetemperaturen (33A-33C) zum Wiederaufnehmen des Betriebs der Verdampfereinheiten (13A-13C) zwischen den eingestellten Temperaturen (29A-29C) und den Betriebswiedererlangungstemperaturen (31A-31C) eingestellt sind, und
wobei der automatische Start-Stopp-Betriebsmodus (27) einen Thermostat-aus-Haltebetriebsmodus beinhaltet, der durch Durchführen des Betriebs der Verdampfereinheiten (13A-13C), wenn die Kältezellen, die die jeweiligen eingestellten Temperaturen erreicht haben, die Betriebsstarthaltetemperaturen erreichen, und durch Stoppen des Betriebs der Verdampfereinheiten (13A-13C), wenn die Kältezellen die jeweiligen eingestellten Temperaturen erreichen, den Betrieb und das Stoppen der Verdampfereinheiten (13A-13C) wiederholt, bis alle Kältezellen die jeweiligen eingestellten Temperaturen erreichen, derart, dass die Temperaturen in den Kältezellen zwischen den eingestellten Temperaturen und den Betriebsstarthaltetemperaturen liegen.

2. Landtransportkältesystem, das in der Lage ist, eine Vielzahl von Kältezellen zu kühlen und zu erwärmen, wobei das Landtransportkältesystem einen Verdichter (5), der von einer dedizierten Stromquelle angetrieben wird; eine Vielzahl von Verdampfereinheiten, die jeweils in der Vielzahl von Kältezellen angeordnet und parallel mit einem Kältemittelkreis verbunden sind, durch den ein Kältemittel zirkuliert; und eine Steuerung (15) mit einem automatischen Start-Stopp-Betriebsmodus (27) umfasst, die
1) in einen Thermostat-aus-Status eintritt, um den Betrieb der einzelnen Verdampfereinheiten (13A-13C) zu stoppen, wenn eingestellte Temperaturen (29A-29C), die für die jeweiligen Kältezellen eingestellt sind, erreicht werden,
2) den Betrieb des Verdichters (5) stoppt, wenn sich alle Kältezellen im Thermostat-aus-Status befinden, und
3) den Betrieb des Verdichters (5) wiederaufnimmt, wenn Betriebswiedererlangungstemperaturen (31A-31C), die derart eingestellt sind, dass sie um eine vorbestimmte Temperatur höher oder niedriger sind als die eingestellten Temperaturen, erreicht werden, wobei
im automatischen Start-Stopp-Betriebsmodus Betriebsstopphaltetemperaturen (37A-37C) zum Stoppen des Betriebs der Verdampfereinheiten (13A-13C) auf einer niedrigeren Temperaturseite der eingestellten Temperaturen eingestellt sind, wenn die Betriebswiedererlangungstemperatur um einen vorbestimmten Betrag höher eingestellt ist als die eingestellte Temperatur, und wobei
der automatische Start-Stopp-Betriebsmodus einen Thermostat-aus-Haltebetriebsmodus beinhaltet, der durch Fortsetzen des Betriebs der Verdampfereinheiten (13A-13C) in den Kältezellen, die die jeweiligen eingestellten Temperaturen erreicht haben, und Stoppen des Betriebs der Verdampfereinheiten (13A-13C), wenn die Kältezellen die Betriebsstarthaltetemperaturen erreichen, und durch Durchführen des Betriebs der Verdampfereinheiten (13A-13C), wenn die Kältezellen die jeweiligen eingestellten Temperaturen erreichen, den Betrieb und das Stoppen der Verdampfereinheiten (13A-13C) wiederholt, bis alle Kältezellen die jeweiligen eingestellten Temperaturen erreichen, derart, dass die Temperaturen in den Kältezellen zwischen den eingestellten Temperaturen und den Betriebsstopphaltetemperaturen liegen.

3. Landtransportkältesystem nach einem der Ansprüche 1 oder 2, wobei der Betrieb von jeder der Verdampfereinheiten das Zuführen des Kältemittels zu einem Verdampfer (13A-13C) beinhaltet und wobei das Stoppen von jeder der Verdampfereinheiten das Stoppen der Zuführung des Kältemittels zum Verdampfer (13A-13C) beinhaltet.

## Revendications

1. Système de réfrigération pour transport terrestre capable de refroidir et de chauffer une pluralité de cellules de réfrigération, le système de réfrigération pour transport terrestre comprenant un compresseur (5) entraîné par une source de puissance dédiée ; une pluralité d'unités d'évaporateur (13A-13C) disposées respectivement dans la pluralité de cellules de réfrigération et connectées en parallèle à un circuit réfrigérant à travers lequel circule un fluide réfrigérant ; et un dispositif de commande (15) ayant un mode de fonctionnement de marche/arrêt automatique (27) qui
1) obtient un état d'arrêt par thermostat pour arrêter le fonctionnement des unités d'évaporateur individuelles lorsque des températures de consigne (29A-29C) fixées pour les cellules de réfrigération respectives sont atteintes,
2) arrête le fonctionnement du compresseur (5) lorsque toutes les cellules de réfrigération sont à l'état d'arrêt par thermostat, et
3) reprend le fonctionnement du compresseur (5) lorsque des températures de rétablissement du fonctionnement (31A-31C) fixées pour être supérieures ou inférieures aux températures de consigne d'une température prédéterminée sont atteintes,
dans lequel,
dans le mode de fonctionnement de marche/arrêt automatique, des températures de maintien de début de fonctionnement (33A-33C) pour reprendre le fonctionnement des unités d'évaporateur (13A-13C) sont fixées entre les températures de consigne (29A-29C) et les températures de rétablissement du fonctionnement (31A-31C), et
dans lequel, le mode de fonctionnement de marche/arrêt automatique (27) comporte un mode de fonctionnement de maintien d'arrêt par thermostat qui répète le fonctionnement et l'arrêt des unités d'évaporateur (13A-13C) jusqu'à ce que toutes les cellules de réfrigération atteignent les températures de consigne respectives, de sorte que les températures dans les cellules de réfrigération soient comprises entre les températures de consigne et les températures de maintien de début de fonctionnement, en exécutant le fonctionnement des unités d'évaporateur (13A-13C) lorsque les cellules de réfrigération ayant atteint les températures de consigne respectives atteignent les températures de maintien de début de fonctionnement, et en arrêtant le fonctionnement des unités d'évaporateur (13A-13C) lorsque les cellules de réfrigération atteignent les températures de consigne respectives.

2. Système de réfrigération pour transport terrestre capable de refroidir et de chauffer une pluralité de cellules de réfrigération, le système de réfrigération pour transport terrestre comprenant un compresseur (5) entraîné par une source de puissance dédiée ; une pluralité d'unités d'évaporateur (13A-13C) disposées respectivement dans la pluralité de cellules de réfrigération et connectées en parallèle à un circuit réfrigérant à travers lequel circule un fluide réfrigérant ; et un dispositif de commande (15) ayant un mode de fonctionnement de marche/arrêt automatique (27) qui
1) entre dans un état d'arrêt par thermostat pour arrêter le fonctionnement des unités d'évaporateur individuelles (13A-13C) lorsque des températures de consigne (29A-29C) fixées pour les cellules de réfrigération respectives sont atteintes,
2) arrête le fonctionnement du compresseur (5) lorsque toutes les cellules de réfrigération sont à l'état d'arrêt par thermostat, et
3) reprend le fonctionnement du compresseur (5) lorsque des températures de rétablissement du fonctionnement (31A-31C) fixées pour être supérieures ou inférieures aux températures de consigne d'une température prédéterminée sont atteintes, dans lequel,
dans le mode de fonctionnement de marche/arrêt automatique, des températures de maintien d'arrêt du fonctionnement (37A-37C) pour arrêter le fonctionnement des unités d'évaporateur (13A-13C) sont fixées à un côté de température inférieur des températures de consigne lorsque la température de rétablissement du fonctionnement est fixée pour être supérieure à la température de consigne d'une quantité prédéterminée, et dans lequel,
le mode de fonctionnement de marche/arrêt automatique comporte un mode de fonctionnement de maintien d'arrêt par thermostat qui répète le fonctionnement et l'arrêt des unités d'évaporateur (13A-13C) jusqu'à ce que toutes les cellules de réfrigération atteignent les températures de consigne respectives, de sorte que les températures dans les cellules de réfrigération soient comprises entre les températures de consigne et les températures de maintien d'arrêt du fonctionnement, en laissant se poursuivre le fonctionnement des unités d'évaporateur (13A-13C) dans les cellules de réfrigération ayant atteint les températures de consigne respectives et en arrêtant le fonctionnement des unités d'évaporateur (13A-13C) lorsque les cellules de réfrigération atteignent les températures de maintien de début de fonctionnement, et en exécutant le fonctionnement des unités d'évaporateur (13A-13C) lorsque les cellules de réfrigération atteignent les températures de consigne respectives.

3. Système de réfrigération pour transport terrestre selon l'une quelconque des revendications 1 ou 2, dans lequel le fonctionnement de chacune des unités d'évaporateur comporte l'alimentation d'un évaporateur (13A-13C) en réfrigérant, et dans lequel l'arrêt de chacune des unités d'évaporateur comporte l'arrêt de l'alimentation de l'évaporateur (13A-13C) en réfrigérant.
